# EUROPEAN PATENT APPLICATION

(11) **EP 4 835 788 A1**
(43) Date of publication of application: **04.11.2026**
(21) Application number: 25758177.7
(22) Date of filing: 28.01.2025
(51) Int. Cl.: G06Q 30/018, G06Q 30/015

(54) **INFORMATION PROCESSING SYSTEM, INFORMATION PROCESSING METHOD, AND PROGRAM**

(30) Priority: 22.02.2024 JP 2024025473
(71) Applicant: OMRON Corporation, Kyoto-shi, Kyoto 600-8530 (JP)
(72) Inventor: MUNETA, Yasuo, Kyoto-shi, Kyoto 600-8530 (JP); SASAKI, Jun, Kyoto-shi, Kyoto 600-8530 (JP); OKADA, Naoki, Kyoto-shi, Kyoto 600-8530 (JP)
(74) Representative: Isarpatent
(86) International application number: PCT/JP2025/002565
(87) International publication number: WO 2025/177779

(57) **Abstract**

An information processing system comprises: a storage unit configured to store product information, which is a set of data associated with a product ID identifying each product and including at least information on the product's manufacturing conditions; an information update unit configured to update the product information associated with the product ID, in response to an event relating to manufacturing or distribution of the product, by using a user ID identifying a user and information on the product ID, and to cause the storage unit to store information on the user ID used for the update in association with the updated product information; a detection unit configured to detect first or second detection target processes for the product information; and a warning unit configured to perform predetermined warning processing when the first detection target processes are detected for the product information or the second detection target processes are not detected.

## Description

### TECHNICAL FIELD

The present invention relates to an information processing system, an information processing method, and a program.

### BACKGROUND OF INVENTION

There is a need for a consumer of a product to know detailed information about the product that the consumer has obtained, such as what kind of a material has been used, how much or what kind of energy has been consumed to manufacture the product, and who, when, and how the product has been manufactured, transported, managed, and sold.

On the other hand, there is a need for companies involved in manufacturing and distribution of products to confirm that the products are "appropriately" manufactured, transported, managed, and sold (to exclude products that are not "appropriately" manufactured, transported, managed, and sold before consumers obtain the products), and to provide the consumers with information indicating that the products are appropriately manufactured and distributed.

In response to such needs, various unit for achieving traceability of products have been conventionally proposed, and, for example, Patent Document 1 discloses a technique that can acquire (inquire and answer) various information related to a product through a label attached to the product while maintaining anonymity by a blockchain technique.

### CITATION LIST

### PATENT LITERATURE

PTL 1: JP 2021-528720 T

### SUMMARY

### TECHNICAL PROBLEM

However, such a conventional technique has a problem that authenticity of the product information to be provided is not guaranteed (that is, although tamper resistance of the information and an access history thereof is guaranteed, authenticity of content and a source of the original information is unknown). Furthermore, in a case where inappropriate handling of information including fraud is performed in a process from manufacturing (including planning and development stages) to distribution of products, even the above technique can achieve an object of delivering to consumers the products (and the information that corroborates that the products have been appropriately developed, manufactured, transported, managed, and sold) guaranteed to have been appropriately developed, manufactured, transported, managed, and sold.

In view of the above problems, an object of the present invention is to provide a technique that enables browsing of information on a product and each element related to manufacturing and distribution of the product, and support guarantee of the authenticity of the information related to the browsing.

### SOLUTION TO PROBLEM

To solve the above problems, for example, the present invention adopts the following configuration. That is, an information processing system that includes one or more information processing apparatuses and processes information related to a product includes: storage unit configured to store product information that is an information group associated with a product ID for identifying each of the products, and including at least information related to a manufacturing condition of the product; information update unit configured to update the product information associated with the product ID in response to occurrence of a predetermined event related to manufacturing or distribution of the product using a user ID for identifying a user related to at least one of the manufacturing, the distribution, or certification of the product and information on the product ID, and causes the storage unit to store the information on the user ID used for the update in association with the product information related to the update; detection unit configured to detect one or more first detection target processes or one or more second detection target processes for the product information determined in advance for each of the product IDs; and warning unit configured to execute predetermined warning processing when the one or more first detection target processes for the product information are detected or when the one or more second detection target processes are not detected.

Note that the "product" described herein includes both a final product delivered to an end user, and an intermediate product that corresponds to a part of such a final product. Furthermore, "the information related to the manufacturing condition of the product" includes various information. More specifically, the "information related to the manufacturing condition of the product" may include, for example, information on a manufacturing line related to manufacturing of the product, information on a manufacturing date and time of the product, information on a manufacturer of the product, a manufacturing apparatus related to manufacturing of the product, software related to manufacturing of the product, an operator who manufactures the product, materials used for the product, an amount of consumed energy related to manufacturing the product, and a CO2 emission amount. Furthermore, the information also corresponds to information for obtaining such information (e.g., an ID, a code, a URL address, associated with content of the information) instead of the information itself.

Furthermore, the "product information" also includes information to be added in response to distribution of the product. More specifically, the "product information" may include, for example, information related to a state of a product (such as an inspection result and a damaged state), information related to work content performed on the product, information related to a location (position) of the product, information related to a time at which information has been appended (updated), information related to an environment of the location of the product (such as a temperature and a humidity), a CO2 emission amount related to distribution of the product, information on cost related to the distribution of the product, and information (reuse flag) indicating that the product has been once delivered to an end consumer. Furthermore, in this description, as activities related to a value chain including an engineering chain and a supply chain, "manufacture" is used as a meaning including planning, design, and development of a product, and "distribution" is used as a meaning widely including transportation, storage, sale, maintenance, disposal, and reuse of a product. Furthermore, in this description, "update" includes not only overwriting of information, but also simple addition or new registration of information.

Furthermore, the "first detection target processes" may be, for example, inappropriate processing for the product information. More specifically, the "first detection target processes" include that information is not updated in a timely manner (which corresponds to update performed at timings earlier or later than a predetermined timing), that the information update is performed at a place outside a predetermined area, that a work history is updated (added) in a work order different from a predetermined order for a series of work to be performed on the product, that the same type of work content is redundantly registered for a series of work to be performed on the product (e.g., a plurality of pieces of information indicating delivery to a wholesaler are appended for the same product ID), that values (such as a temperature and a humidity) related to an environment in which the product is located at a time of the information update is out of an appropriate condition, and that the information update is performed using a user ID whose involvement in distribution of the product is not permitted. Furthermore, the "first detection target processes" also include a case where a combination of a time and a place at which update is performed is not appropriate (e.g., a case where, when a product is transported, both a place of a transportation destination and a transport completion time are within a range of a condition, yet it is estimated that transportation work that violates compliance has been performed from a positional relationship between a transportation source and the transportation destination and a time required for the transportation).

Furthermore, the "second detection target processes" may be appropriate processing for the product information. More specifically, contrary to the examples of the first detection target processes described above, the "second detection target processes" include that information is updated in a timely manner, that the information is updated in a predetermined area, that a work history is updated (added) in a work order that complies with a predetermined order a number of times for a series of work performed on the product, that values (such as a temperature and a humidity) related to an environment in which a product is located at the time of the information update is within an appropriate condition, and that the information is updated for a work permitted using a user ID permitted in advance.

Furthermore, in the above description, the "predetermined warning processing" may include sending information to a registered destination, or
issuing a warning through output means (such as a display or a speaker) of a terminal managed by a user. That is, the "warning unit" may be provided in, for example, a server apparatus, or may be provided in a user terminal used by each user.

According to the above configuration, an event that occurs in response to distribution of a product and information on a user related to the event are appended to the product information, and inappropriate processing (that is not limited to falsification of the information, and includes processes indicating undesirable handling of the product in general) for the product information is recognized by any method of a so-called blacklist method and a whitelist method. Furthermore, a warning is issued when the inappropriate processing is performed, so that the user having received the warning can quickly investigate and/or take a countermeasure for a target product. Thus, it is possible to prevent inappropriately handled products from being delivered to end consumers.

Furthermore, the information update unit may cause the storage unit to store information on a time of the update together with the information on the user ID used for the update in association with the product information related to the update when the update is performed. According to this, it is possible to include whether information is updated in a timely manner in the first detection target processes and the second detection target processes, and more clearly manage a history of the product (product information).

Furthermore, the warning unit may send warning information to users including at least one of a user identified based on one of the user IDs stored when the product information is updated, and a user set in advance. Consequently, it is possible to issue a warning to an appropriate user who needs to receive a warning, such as any user involved in manufacturing, distribution, and sale of a product (e.g., a user on an upstream side of logistics such as a product manufacturer), or a user in charge of product tracing or quality management.

Furthermore, the product information may include at least certified manufacturing information that is information related to the manufacturing of the product and has been authenticated by an authentication organization. Here, the information to be authenticated by the authentication organization includes information such as a manufacturing conditions of the product, materials of the product, a creation date and time (an update date and time) of the product information, and a creator (updater) of the product information. In this description, although both the terms "certification" and "authentication" mean guaranteeing authenticity of an object, "certification" is mainly used to indicate a state, and "authentication" is mainly used to indicate an action. According to such a configuration, it is possible to support guarantee of the original authenticity of the product information handled in the system.

Furthermore, the predetermined event may include work to be performed on the product in a process of the distribution of the product, and the information update unit may update the product information when the work is performed. Furthermore, the predetermined event may include that the one or more first detection target processes for the product information have been detected or that the one or more second detection target processes have not been detected, and the information update unit may update the product information when the one or more first detection target processes have been detected or when the one or more second detection target processes have not been detected. Consequently, it is possible to reflect, in the product information in a timely manner, a fact that handling that causes a warning has been performed at a time of various work in a distribution process of the product, or in the distribution process of the product.

Furthermore, the information processing system may further include group ID validation unit configured to associate a group ID for identifying a group including a plurality of the products, and the product ID of each individual product included in the group, and the information update unit may be configured to collectively update the product information associated with each individual product included in the group using information on the group ID.

According to such a configuration, it is possible to efficiently manage product information for products to be mass-produced. Note that the group ID may be validated (and invalidated) based on a privilege associated with the user ID.

Furthermore, the information processing system may further include encoding unit configured to convert information including at least the product ID into a code, and one or more decoding unit configured to decode the information converted into the code and enable access to the product information associated with the product ID. Note that the decoding unit may be a general-purpose apparatus, but may also be a dedicated device including an environmental information sensor such as a temperature sensor. Consequently, it is also possible to automatically append, to the product information, information on an environment in which the product has been placed at a point of time when the code is decoded.

The environment such as a temperature/humidity has a significant influence on quality of a product related to food and drink in particular, and therefore, although a product manufacturer needs to perform strict management in the distribution process, it is unclear from by self-declaration of a distributor whether the information on an environment in which the product has been placed can be accurately managed. In this regard, by automatically acquiring the environment information such as the temperature/humidity by the environment information sensor included in the decoding unit, and appending the automatically acquired environment information to the product information, it is possible to prevent the user from recording the environment information different from the fact from being recorded.

Furthermore, the decoding unit may be integrated with a POS (Point Of Sale) register managed by a retailer. According to such a configuration, it is also possible to perform an operation of reading the code at the POS register when the product is sold, and appending, to the product information, consumer attribute information input to the POS.

Furthermore, each decoding unit and the user ID may be associated with each other. Consequently, when the code is decoded, it is also possible to append the decoded user ID to the product information.

Furthermore, a privilege related to the access to each piece of the product information is set to the user ID, each individual decoding unit is associated with the user ID, and the information update unit may append predetermined information associated with the privilege set to the corresponding user ID, to the product information when the code is decoded by the decoding unit.

Here, the privilege related to access to the product information includes both a privilege related to browsing of the product information and a privilege related to updating the product information. Here, the browsing privilege also includes not only content of information that can be browsed, but also determination of a time period during which the information can be browsed. Furthermore, the update privilege also includes not only the content of information that can be updated, but also determination of the time period during which the information can be updated.

According to such a configuration, the user can easily browse information having content matching the browsing privilege, while a provider of the information can determine to whom and what information is to be provided, so that it is possible to implement a highly convenient system. Furthermore, the user can update information according to the update privilege for the information, and the record of the update is appended to the product information at the time of the update, so that it is possible to implement a system that has excellent tamper resistance and is highly convenient.

Furthermore, the code may include information indicating a location of a first interface for accessing the product information associated with the product ID, and the decoding unit may be configured to output the first interface by decoding the information indicating the location of the first interface.

Furthermore, the first interface output by the decoding unit may include a field for accepting an input of the user ID, and the decoding unit may output a second interface matching the privilege associated with the user ID whose input has been accepted.

Such a configuration can provide, for example, a convenient system in which the first interface is a display interface of limited product information for end consumers, and that makes it necessary to input a user ID for which a privilege to perform browsing or update has been set to further browse or update the product information. However, the first interface may be configured to display the product information associated with the browsing privilege of the user ID by using the decoding unit associated with the user ID.

Note that each unit in the information processing system can be configured in separate terminals connected through a network, and a plurality of each of the unit may be present. Furthermore, there may be a user who manages only part of the unit of the information processing system. Furthermore, in the information processing system, the product information may be processed by a distributed ledger system. According to such a configuration, a system with excellent tamper resistance with respect to information can be provided.

Furthermore, the present invention can be recognized as a following information processing method. That is, the information processing method that is executed by one or more information processing apparatuses and processes information related to a product includes: storing product information that is an information group associated with a product ID for identifying each individual product, and including at least information related to a manufacturing condition of the product; updating the product information associated with the product ID in response to occurrence of a predetermined event related to manufacturing or distribution of the product using a user ID for identifying a user related to at least one of the manufacturing, the distribution, or certification of the product and information on the product ID, and storing the information on the user ID used for the update in association with the product information related to the update; detecting one or more first detection target processes or one or more second detection target processes for the product information determined in advance for each of the product IDs; and executing predetermined warning processing when the one or more first detection target processes for the product information are detected or when the one or more second detection target processes are not detected.

Furthermore, the present invention can be recognized as a program for causing a computer to execute the method described above and a computer-readable storage medium that records the program in a non-transitory manner.

Note that each of the above-described configurations and processes may be combined with one another to configure the present invention, as long as no technical inconsistency arises. Furthermore, in this description, numerals described as "first ...", "second ...", are used merely to distinguish from other elements, and do not indicate any order or priority among the elements. Furthermore, each of the above invention-specifying matters does not necessarily need to be implemented as a separate configuration, and a single configuration may serve also as a plurality of invention-specifying matters.

### ADVANTAGEOUS EFFECTS OF INVENTION

According to the present invention, it is possible to provide a technique that can enable browsing of information related to a product and each element related to distribution of the product, and support guarantee of the authenticity of the information related to the browsing.

### BRIEF DESCRIPTION OF THE DRAWINGS

[FIG. 1] FIG. 1 is a schematic view schematically illustrating an information processing system according to Embodiment 1.
[FIG. 2] FIG. 2 is a block diagram schematically illustrating a hardware configuration of an authentication organization terminal according to Embodiment 1.
[FIG. 3] FIG. 3 is a block diagram schematically illustrating a functional configuration of the authentication organization terminal according to Embodiment 1.
[FIG. 4] FIG. 4 is an explanatory diagram illustrating an example of information stored in a storage unit of the authentication organization terminal according to Embodiment 1.
[FIG. 5] FIG. 5A is a first explanatory diagram illustrating an example of a database stored in the storage unit of the authentication organization terminal according to Embodiment 1. FIG. 5B is a second explanatory diagram illustrating an example of a database stored in the storage unit of the authentication organization terminal according to Embodiment 1.
[FIG. 6] FIG. 6 is a block diagram schematically illustrating a functional configuration of a product manufacturer terminal according to Embodiment 1.
[FIG. 7] FIG. 7 is a block diagram schematically illustrating a functional configuration of a distributor terminal according to Embodiment 1.
[FIG. 8] FIG. 8 is a block diagram schematically illustrating a functional configuration of a consumer terminal according to Embodiment 1.
[FIG. 9] FIG. 9 is a flow chart schematically illustrating processing performed in the information processing system according to Embodiment 1.
[FIG. 10] FIG. 10 is a first diagram illustrating exchange of information performed between the authentication organization terminal and the product manufacturer terminal, and a flow of and processing according to Embodiment 1.
[FIG. 11] FIG. 11 is a diagram illustrating exchange of information performed between the authentication organization terminal and the distributor terminal, and a flow of processing according to Embodiment 1.
[FIG. 12] FIG. 12 is a diagram illustrating an example of a part of processing performed by the authentication organization terminal according to Embodiment 1.
[FIG. 13] FIG. 13 is a diagram illustrating exchange of information performed between the authentication organization terminal and the consumer terminal, and a flow of processing according to Embodiment 1.
[FIG. 14] FIG. 14 is an explanatory diagram illustrating an example of an input form for a user ID generated by an information browsing request acceptance unit in Embodiment 1.
[FIG. 15] FIG. 15 is an explanatory diagram illustrating an example of an ID input form used in Variation 2 of Embodiment 1.
[FIG. 16] FIG. 16 is a block diagram schematically illustrating a functional configuration of the product manufacturer terminal in Variation 3 of Embodiment 1.
[FIG. 17] FIG. 17 is a block diagram schematically illustrating a functional configuration of the distributor terminal in Variation 3 of Embodiment 1.
[FIG. 18] FIG. 18 is a schematic view schematically illustrating the information processing system according to Embodiment 2.
[FIG. 19] FIG. 19 is a block diagram schematically illustrating a functional configuration of the authentication organization terminal according to Embodiment 2.

### DESCRIPTION OF EMBODIMENTS

### <Application Examples>

An application example of the present invention will be described below with reference to the drawings. An information processing system 1 according to this application example is an information processing system that allows users (including end consumers) to easily browse collective information on various elements related to the manufacturing/distribution of a product distributed in the market (hereinafter referred to as "product information") and warns the user of update of such information.

The product information in this system is a set of various information, and examples of elements included in the product information include information related to manufacturing of the product (a manufacturer of a product, a manufacturing date and time, a place of manufacturing, a total amount of consumed energy, a CO2 emission amount, a type of energy used to manufacture the product, a source material of the product, and a supplier of the source material), and information related to distribution of the product (information related to events such as transportation, storage, and sale related to the distribution of the product, information indicating an occurrence place/time/parties involved in the events, information related to a state of the product such as a predetermined inspection result and a damaged state, conditions related to an environment in which the product has been placed, such as a temperature and a humidity, and the CO2 emission amount in each distribution stage).

Furthermore, when an event related to manufacturing and distribution of the corresponding product (including work such as manufacturing, transportation, storage, sale, maintenance, disposal, and reuse) occurs, the product information is updated in response to the occurrence of the event. More specifically, for example, a user ID is assigned to each business operator (that is, people involved in manufacturing and distribution of a product) that uses the information processing system 1, and, when each business operator performs work related to distribution of a product, information on, for example, work content, a work place, and a work time is appended to the product information. Note that details of update of the product information will be described in detail below.

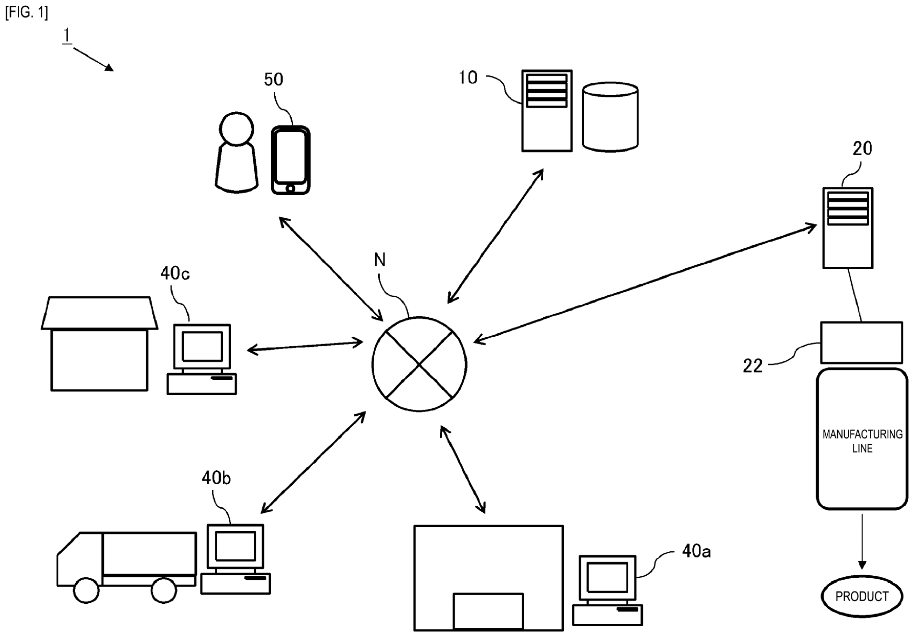

FIG. 1 is a schematic view illustrating a schematic configuration of the information processing system 1 according to this application example. As illustrated in FIG. 1, the information processing system 1 according to this application example employs a configuration that includes a consumer terminal 50 owned by a consumer (a purchaser of a product), a product manufacturer terminal 20 managed by a manufacturer of a product (including fabless-type manufactures that perform only planning, design, and development), an authentication organization terminal 10 managed by an organization that authenticates the product information (hereinafter referred to as the "authentication organization"), and distributor terminals 40 (40a, 40b, and 40c) managed by each subject involved in distribution such as transportation, storage, wholesale, and retail of the product, and in which these terminals are communicably connected through a communication network N. Note that, in the following description, the plurality of distributor terminals 40a, 40b, and 40c are simply described as the distributor terminals 40, except for a case where the plurality of distributor terminals 40a, 40b, and 40c need to be distinguished and described. The same also applies to a plurality of other components included in the system.

The product manufacturer generates, at the product manufacturer terminal 20, product information on products that the product manufacturer manufactures, and transmits the product information to the authentication organization terminal 10. Furthermore, the authentication organization authenticates the transmitted product information,
generates certification information that certifies the authenticated product information (hereinafter referred to as "product certification information") at the authentication organization terminal 10, associates the certification information with the authenticated product information, and registers the authenticated product information in a database (DB).

Furthermore, the authentication organization issues, by the authentication organization terminal 10, product identification information (hereinafter identification information is referred to as an "ID") that is associated with the authenticated product information certified by the product certification information and identifies individual products. The issued product ID is transmitted to the product manufacturer terminal 20 through the communication network N.

The product manufacturer performs processing of associating the product ID issued by the product manufacturer terminal 20 with each product, and completes association between a single product, the product ID, and the authenticated product information. More specifically, information including the product ID may be encoded into a barcode or a QR code (trade name), and the code may be attached to and thereby associated with the product.

A manufacturer, a distributor, and consumers of the product use the product ID (a code obtained by encoding the product ID) attached to the product and make a browsing request and an update request for the product information using the user IDs of the manufacturer, the distributor, and the consumers as keys. More specifically, the manufacturer, the distributor, and the consumers transmit a browsing or update request for the product information to the authentication organization terminal 10 through the communication network N by, for example, accessing a portal site provided by the authentication organization and inputting the product ID (and the user ID) or decoding the code attached to the product.

When accepting a browsing request from the terminal managed by each user, the authentication organization terminal 10 extracts at least a part of the product information (e.g., the CO2 emission amount related to manufacturing of the product, raw materials of the product, an event having occurred in a distribution process of the product) from the DB according to a browsing privilege associated with the user ID of each user, and transmits the part of the product information to a terminal (user) having made the browsing request.

Furthermore, when accepting the update request from the distributor terminal 40, the authentication organization terminal 10 appends, to the product information in the DB, the update (appending) content of the product information, a time at which the update request has been made, position information of the product related to the update request (the position information of the terminal that has made the update request), information on an environment in which the product related to the update request is located (the information on the environment in which the terminal that has made the update request is located), and the user ID used at the time of the update request.

Furthermore, when the product information is not appropriately updated as described above, the authentication organization terminal 10 detects the inappropriate update, and sends warning information to any user (e.g., product manufacturer). More specifically, as for handling of this product information per product ID, for example, the authentication organization terminal 10 detects that information update matching content of one or more types of inappropriate handling (so-called blacklist) has been performed or information update matching content of one or more types of appropriate handling (so-called whitelist) has not been performed in a timely manner, and transmits warning information to a terminal of a user related to a user ID set in advance as a notification target.

According to the information processing system 1 according to such an application example, a user having received the warning can quickly take a countermeasure of conducting a follow-up survey of a target product or stopping distribution of the target product, so that it is possible to prevent the inappropriately handled product from being delivered to an end consumer.

### <Embodiment 1>

A specific embodiment of the present invention will be described below in more detail. However, unless otherwise specified, the components, and processes described in the following embodiment are not intended to limit the scope of the invention to those alone.

### (Overview of System)

An information processing system 1 according to Embodiment 1 is the same as the information processing system 1 according to the application example. That is, as illustrated in FIG. 1, the information processing system 1 according to the present embodiment employs a configuration that includes the authentication organization terminal 10, the product manufacturer terminal 20, the distributor terminals 40 (40a, 40b, and 40c), and the consumer terminal 50, and in which these terminals are communicably connected through the communication network N. Furthermore, the information processing system 1 according to the present embodiment includes one or more control apparatuses 22 that are communicably connected to the product manufacturer terminal 20 and control a manufacturing apparatus of the product. Furthermore, although not illustrated, the information processing system 1 may be configured to include a plurality of the product manufacturer terminals 20 and a plurality of the consumer terminals 50.

### (Configuration of Authentication Organization Terminal)

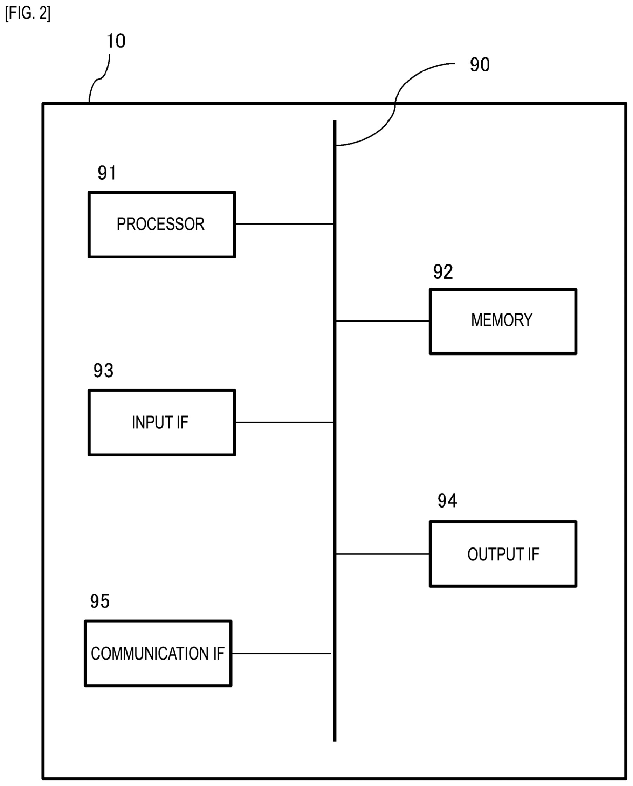

First, the authentication organization terminal 10 will be described. A common server computer may be adopted for the authentication organization terminal 10, for example. FIG. 2 is a block diagram schematically illustrating a hardware configuration of the authentication organization terminal 10. As described above, the authentication organization terminal 10 is an information processing terminal managed by the authentication organization, and includes, as components, a processor 91, a memory 92, an input interface (IF) 93, an output IF 94, and a communication IF 95 mutually connected through a connection bus 90 as illustrated in FIG. 2.

Any arithmetic processing apparatus such as a Central Processing Unit (CPU), a Micro-Processing Unit (MPU), and a Digital Signal Processor (DSP) may be adopted for the processor 91, for example.

Although not illustrated in the drawings, the memory 92 includes a main storage apparatus such as a flash memory, a Random Access Memory (RAM), and a Read Only Memory (ROM), and an auxiliary storage apparatus such as a Solid State Drive (SSD), an Erasable Programmable ROM (EPROM), a flash memory, a USB memory, and a Secure Digital (SD) memory card. The memory 92 stores information such as programs executed by the processor 91, data processed by the processor 91, setting information on operations, and various DBs described below. When the program stored in the memory 92 is executed by the processor 91 and each configuration of the authentication organization terminal 10 is controlled, functional units that achieve predetermined purposes can be implemented.

Examples of the input IF 93 may include various input devices such as a keyboard, a mouse, a camera, and a microphone, for example. Furthermore, examples of the output IF 94 may include various output devices such as a display, a speaker, and a printer. Furthermore, it is also possible to adopt a touch panel display as a configuration serving both as the input IF 93 and the output IF. An appropriate configuration may be adopted for the communication IF 95 according to the connection method (wired or wireless, connection standards,) with the communication network N to be connected.

### (Functional Configuration of Authentication Organization Terminal)

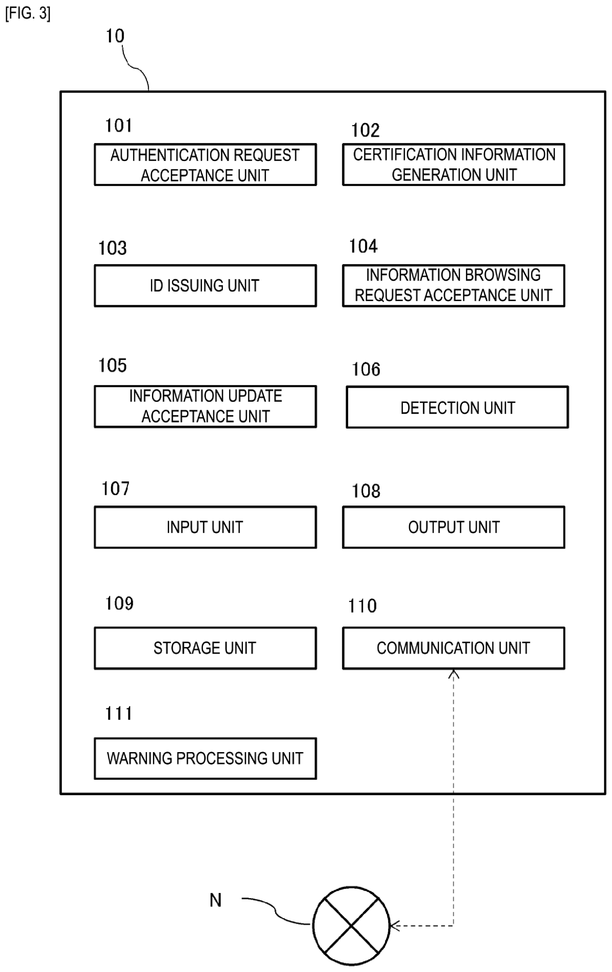

FIG. 3 is a block diagram schematically illustrating a functional configuration of the authentication organization terminal 10. As illustrated in FIG. 3, the authentication organization terminal 10 includes functional units of an authentication request acceptance unit 101, a certification information generation unit 102, an ID issuing unit 103, an information browsing request acceptance unit 104, an information update acceptance unit 105, a detection unit 106, an input unit 107, an output unit 108, a storage unit 109, a communication unit 110, and a warning processing unit 111.

The authentication request acceptance unit 101 receives an authentication request for product information and user information related to users involved in manufacturing or distribution of a product. More specifically, the authentication request acceptance unit 101 accepts authentication requests when receiving the product information and the user information related to the authentication request from the product manufacturer terminal 20 and the distributor terminal 40 through the communication network N.

The certification information generation unit 102 generates each certification information on product certification information that certifies the product information related to authentication, and user certification information that certifies user information related to the authentication. Note that the user information may include information for specifying a user such as a name, an address (location), and a date of founding of the user, and information related to an evaluation (the degree of reliability) of the user. The authentication organization terminal 10 generates the certification information, so that the product information, the content of the user information, and authenticity of the content of the user information are authenticated by the authentication organization.

The ID issuing unit 103 issues various IDs. More specifically, the ID issuing unit 103 issues IDs such as a user ID that is associated with the user certification information and individually identifies each user, and a product ID that is associated with the product certification information and individually identifies a corresponding product. Furthermore, the product ID issued by the ID issuing unit 103 is associated with the product information certified by the product certification information, so that it is possible to access the corresponding product information based on the product ID.

Furthermore, the user ID issued by the ID issuing unit 103 is associated with an update privilege (whether information can be updated, the range of the update, and an updatable timing) and a browsing privilege (a browsable range of the information and a browsable timing) for each piece of product information stored in the DB described below.

The information browsing request acceptance unit 104 accepts browsing requests for the authenticated product information and user information. The information browsing request acceptance unit 104 accepts the browsing request for each corresponding information from any of the terminals connected through the communication network N using at least the product ID as the key. Furthermore, the information browsing request acceptance unit 104 transmits the information associated with the browsing privilege set for the user ID to the terminal that has made the browsing request through the communication unit 110 described below. Note that the user ID may be used together with the product ID as a key for the browsing request. Furthermore, in this case, input (transmission) of the product ID and the user ID and an input request may be performed simultaneously, or the input may be requested in a stepwise manner.

On a condition that the product ID and the user ID of the user having the update privilege for the product information associated with the product ID are input, the information update acceptance unit 105 accepts update of these pieces of information stored in the DB. For example, the information update acceptance unit 105 accepts an update request for each corresponding information from any of the terminals connected through the communication network N using the product ID as the key, and requests transmission of the user ID. Furthermore, the information update acceptance unit 105 transmits an information update User Interface (UI) matching the update privilege set for the user ID to the terminal that has made the update request. When accepting the information update through the information update UI, the information update acceptance unit 105 updates the information on the DB, and appends an update time and the user ID of an updater to the DB. Note that the term "update" herein includes not only overwriting (rewriting) of information, but also appending information.

When the information update acceptance unit 105 accepts one or more detection target processes (handling) set in advance for handling of the product information per product ID, the detection unit 106 detects the processes.

Note that detection target processes set in advance and described herein may include that the product information has been updated (or has not been updated) within a predetermined time, the product information has been updated (or has not been updated) within a predetermined area, a work history has been updated in a work order that complies with a predetermined order a number of times (or a work history has been updated in a different work order or a different number of times),a temperature in an environment in which the product is located at the time of information update falls under the condition (or the temperature does not fall under the condition), and work permitted using a user ID permitted in advance is updated (or a user ID that is not permitted or work that is not permitted is updated).

Note that, as long as the detection target processes by the detection unit 106 have such content that makes it possible to detect undesirable handling of a product for the product manufacturer is performed, the content may be a so-called white list or a black list, yet description is given in the present embodiment assuming that the detection target processes by the detection unit 106 indicate inappropriate handling of a product (so-called black list).

When the update processing of the product information indicating the inappropriate handling of the product is detected by the detection unit 106 (or when the update processing of the product information indicating appropriate handling of the product is not detected), the warning processing unit 111 performs processing of sending warning information indicating the detection of the update processing to a predetermined user through the communication unit 110 described later. The warning information may be a text message such as an E-mail, or may be voice communication that uses a telephone.

Note that the predetermined user may be a product manufacturer, or a user related to update performed immediately before an update request for inappropriate product information detected by the detection unit 106. Furthermore, the predetermined user may be all users who have updated the product information before the update request for the inappropriate product information detected by the detection unit 106. As described later, when the product information is updated, a user ID of a user who has requested update is stored in such a way that the user ID is specified, so that a transmission destination of the warning information is specifically specified based on the user ID. Alternatively, the predetermined user may be a user (e.g., administrator) registered in advance regardless of individual product information.

The input unit 107 is implemented with the above input IF 93, and transmits various input signals input through various input devices to the processor 91. Furthermore, the output unit 108 is implemented with the above output IF 94, and outputs various information through an output device such as a display. The communication unit 110 is implemented with the communication IF 95, and performs information communication with another terminal in the system through the communication network N.

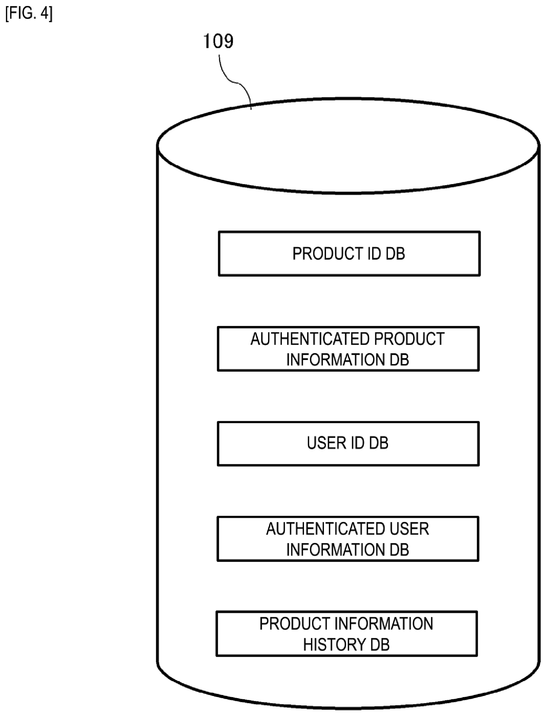

The storage unit 109 is implemented with the above memory 92, and stores various information. FIG. 4 is a diagram illustrating an example of information held in the storage unit 109. As illustrated in FIG. 4, the storage unit 109 stores various information including a product ID, authenticated product information, a user ID, authenticated user information, and update content (history) of the product information. Furthermore, at least a part of these pieces of information are the database (DB) according to the content thereof, and each database is managed as a relational database.

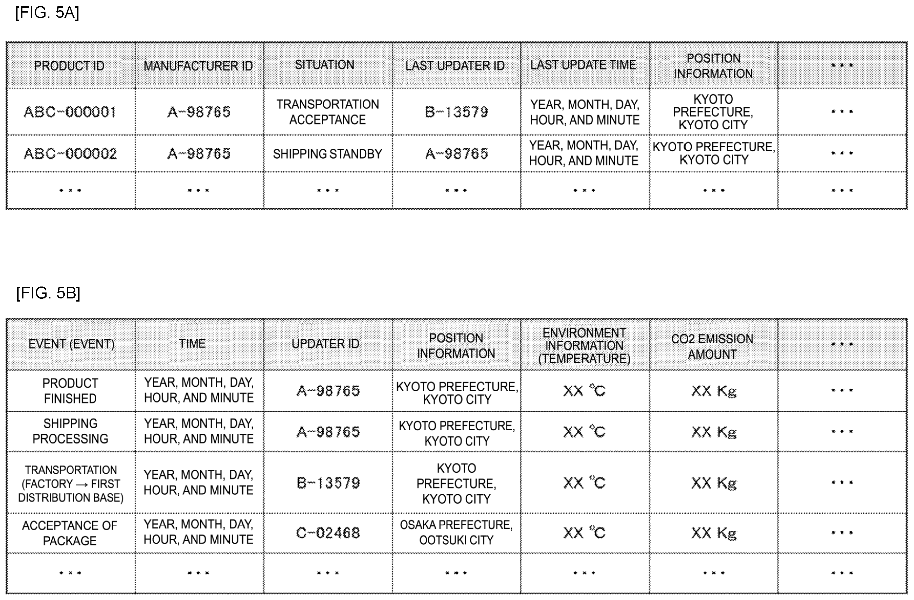

For example, an authenticated product information DB stores the product information that has been received from the product manufacturer terminal 20 and for which certification information has been generated. FIG. 5A illustrates an example of the authenticated product information DB. The authenticated product information DB stores, as a database for each authenticated product, product information such as a product ID, a manufacturer ID (a user ID for identifying a product manufacturer that has manufactured a product), a current status of the product (last update content of the product information), a user ID of a last updater of the product information, a last update time of the product information, a location at the time of last update of the product information, and a user ID of a transmission destination of a warning by the warning processing unit 111.

Note that each piece of product information in the authenticated product information DB may include information on a manufacturing line related to manufacturing of a product, and information on a manufacturing apparatus used for manufacturing of the product. More specifically, each piece of product information may include as information on the manufacturing line, for example, a manufacturing line ID, an ID of a manufacturing apparatus included in a manufacturing line, an ID of a control apparatus that controls the manufacturing line, an ID for identifying an operator of the manufacturing line, and information on a type of energy used in the manufacturing line. Furthermore, each piece of product information may include as information related to the manufacturing apparatus, for example, a manufacturing apparatus ID, a type (model) of the manufacturing apparatus, an ID of software implemented in the manufacturing apparatus, energy-saving performance of the manufacturing apparatus, and an ID for identifying a manufacturing apparatus manufacturer).

Furthermore, the authenticated user information DB stores user information that has been received from the terminal managed by each user and for which certification information has been generated. Since the content of the user information is as described above, redundant description will be omitted.

Furthermore, a product information history DB stores information (such as update content, a time, and an updater) related to updating each piece product information associated with each product ID. FIG. 5B illustrates an example of the product information history DB. As illustrated in FIG. 5B, for each piece of content related to updating an event occurring in a process of manufacturing/distribution of the product, the product information history DB stores information such as an occurrence time of the event, a user ID of an updater, information on an updated position, information related to an updated environment, and the CO2 emission amount emitted from a previous update time to a current update time as a database.

Here, the "event occurring in the process of manufacturing/distribution of the product" may include not only various work to be performed on the product, but also a fact that an inappropriate update request of the product information has been made (or an appropriate update request has not been made) and a fact that a warning has been transmitted due to the inappropriate update request. The updater of the product information in this case may be an authentication organization or
a user who has made the inappropriate update request.

Furthermore, a product ID DB and a user ID DB store information in which IDs issued by the ID issuing unit 103, product information associated with these IDs, and user information are pairs.

### (Manufacturer Terminal)

Next, the product manufacturer terminal 20 will be described. The product manufacturer terminal 20 is a terminal managed by a product manufacturer, and is communicably connected to another terminal in the system through the communication network N as illustrated in FIG. 1. Furthermore, the product manufacturer terminal 20 is connected to the control apparatus 22 provided to a product manufacturing line.

Similarly to the authentication organization terminal 10, a common server computer may be used for the product manufacturer terminal 20. That is, although not illustrated in the drawings, the product manufacturer terminal 20 includes a processor, a memory, an input IF, an output IF, and a communication IF, as a hardware configuration similarly to the authentication organization terminal 10. Note that the product manufacturer terminal 20 may be configured with a plurality of devices connected by wire or wirelessly. Furthermore, the product manufacturer terminal 20 includes, as one of the input IFs, decoding unit (e.g., a QR code (registered trademark) reader) including an environmental sensor that measures a temperature/humidity in the surroundings. The decoding unit may be associated with a user ID of a product manufacturer so as to be identifiable in the system.

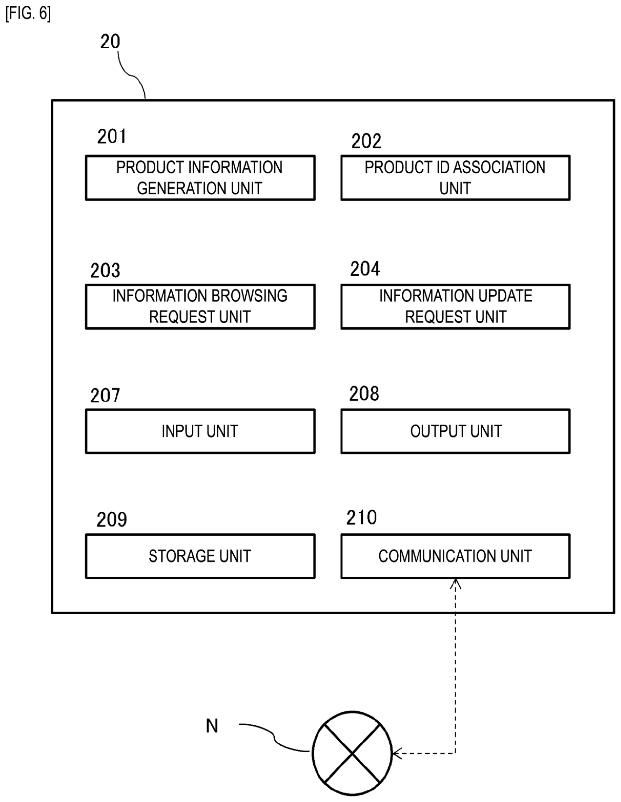

FIG. 6 is a block diagram schematically illustrating a functional configuration of the product manufacturer terminal 20. As illustrated in FIG. 6, the product manufacturer terminal 20 includes functional units of a product information generation unit 201, a product ID association unit 202, an information browsing request unit 203, an information update request unit 204, an input unit 207, an output unit 208, a storage unit 209, and a communication unit 210.

Since the input unit 207, the output unit 208, and the communication unit 210 are the same as those of the authentication organization terminal 10, and the storage unit 209 is also the same as the storage unit 109 of the authentication organization terminal 10 except that the storage unit 209 does not hold various DBs such as the authenticated product information DB, and description thereof will be omitted.

When the product manufacturer manufactures a new product, the product information generation unit 201 generates product information on the product. For the generated product information to be authenticated by the authentication organization, the product manufacturer terminal 20 transmits the product information together with an authentication request to the authentication organization terminal 10 through the communication unit 210.

The product ID association unit 202 performs processing of associating the product ID issued from the authentication organization terminal 10 with each product identified based on the product ID. More specifically, in the present embodiment, the product ID association unit 202 issues a code obtained by encoding information for displaying a UI for requesting browsing and updating of product information associated with the product ID. By attaching the product ID to each product by a method of stamping such a code on the product or outputting a label with the code printed thereon and then attaching the label to the product, association of the product, the product ID, and the authenticated product information is completed. Hence, when the product ID is actually attached to the product, the product ID and the product may be associated by transmitting to the authentication organization terminal 10 information indicating the attachment of the product ID, and updating the information of the authenticated product information DB.

The information browsing request unit 203 makes a browsing request for product information that is authenticated at the authentication organization terminal 10 and stored in the storage unit 109 of the authentication organization terminal 10 in association with the certification information. More specifically, the information browsing request unit 203 transmits a browsing request for information to the authentication organization terminal 10, and requests browsing of information associated with the product ID using at least the product ID as the key through acceptance processing of the information browsing request acceptance unit 104. Note that inputting the user ID (and a password associated with the user ID) at a time of making a browsing request for information may enable browsing of the information within the range of the privilege associated with the user ID.

The information update request unit 204 performs processing for updating at least the information of the authenticated product information DB stored in the storage unit 109 of the authentication organization terminal 10. By transmitting a request for information update to the authentication organization terminal 10, and receiving provision of the UI for the information update using, for example, the product ID or the user line ID as the keys, the information update request unit 204 registers information that needs to be updated.

The browsing request and the update request of the above product information may be transmitted to the authentication organization terminal 10 together with the corresponding product ID by, for example, decoding a code attached to the product by the decoding unit.

### (Distributor Terminal)

Next, the distributor terminal 40 will be described. The distributor terminal 40 is a terminal that is managed by a user assigned with the update privilege for the product information and involved in at least distribution of the product, and is communicably connected to another terminal in the system through the communication network N as illustrated in FIG. 1. Here, examples of the user involved in distribution of the product include a logistics provider (a transportation provider and a warehousing provider), a wholesaler, and a retailer.

Although the product reaches a consumer through each of these distributors after the product is manufactured, by appending to the product information the content of an event (such as a time, a place, and a handling person) of each work to be performed on the product during the distribution, it is possible to easily confirm a current situation of the product, and history information indicating how the product has been handled. The distributor terminal 40 has a function of reflecting such information in the authenticated product information DB.

A general-purpose computer system may be used for the distributor terminal 40. That is, although not illustrated in the drawings, the distributor terminal 40 includes a processor, a memory, an input IF, an output IF, and a communication IF, as a hardware configuration similarly to the authentication organization terminal 10. Note that the distributor terminal 40 may be configured with a plurality of devices connected by wire or wirelessly. Furthermore, the distributor terminal 40 includes decoding unit including an environmental sensor for measuring a temperature/humidity in the surroundings as one of the input IFs similarly to the product manufacturer terminal 20. The decoding unit may be associated with a user ID of each distributor so as to be identifiable in the system.

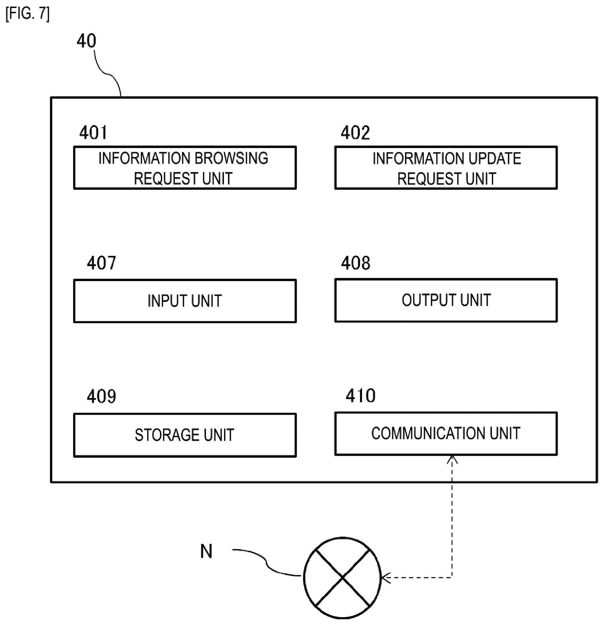

FIG. 7 is a block diagram schematically illustrating a functional configuration of the distributor terminal 40. As illustrated in FIG. 7, the distributor terminal 40 includes functional units of an information browsing request unit 401, an information update request unit 402, an input unit 407, an output unit 408, a storage unit 409, and a communication unit 410.

Since the input unit 407, the output unit 408, and the communication unit 410 are the same as those of the authentication organization terminal 10, and the storage unit 409 is also the same as the storage unit 109 of the authentication organization terminal 10 except that a DB such as the authenticated product information DB is not held, description thereof will be omitted.

The information browsing request unit 401 makes a browsing request for product information that is authenticated at the authentication organization terminal 10, and stored in the storage unit 109 of the authentication organization terminal 10 in association with the certification information. More specifically, the information browsing request unit 401 transmits a browsing request for information to the authentication organization terminal 10, and requests browsing of information associated with the product ID using at least the product ID as the key through acceptance processing of the information browsing request acceptance unit 104. Note that inputting the user ID (and a password associated with the user ID) at a time of making a browsing request for information may enable browsing of the information within the range of the privilege associated with the user ID.

The information update request unit 402 performs processing for updating at least the information of the authenticated product information DB stored in the storage unit 109 of the authentication organization terminal 10. By transmitting a request for information update to the authentication organization terminal 10, and receiving provision of the UI for the information update using, for example, the product ID or the user line ID as the keys, the information update request unit 402 registers information that needs to be updated. For example, when the product is transported, a transportation provider as a business operator to which the update privilege for product information has been assigned appends, to the product information in the authenticated product information DB, information such as a fact that transportation has been accepted, an acceptance time, an acceptance place, a fact that transportation is completed, a completion time, a transportation route, and a CO2 emission amount at a time of the transportation.

The browsing request and the update request of the above product information may be transmitted to the authentication organization terminal 10 together with the corresponding product ID by, for example, decoding a code attached to the product by the decoding unit.

Note that, since the decoding unit includes the environment sensor as described above, the decoding unit stores temperature information at a time at which the code of the product is read is stored, and transmits the temperature information to the authentication organization terminal 10 together with time information and location information at a time at which the code is decoded. Note that the location information may be recognized by a communication base, or may be GPS coordinates acquired from a Global Positioning System (GPS) transmitter apparatus separately provided in the decoding unit.

By transmitting such information related to the time, the place, and the environment at the time of the update request of the product information together with the update request to the authentication organization terminal 10, the detection unit 106 of the authentication organization terminal 10 can detect whether update processing of the product information satisfying the predetermined conditions regarding the time, the place, and the environment is performed (or is not performed).

### (Consumer Terminal)

Next, the consumer terminal 50 will be described. The consumer terminal 50 is a terminal owned by a general consumer, and is communicably connected to another terminal in the system through the communication network N as illustrated in FIG. 1. A general-purpose terminal may be used for the consumer terminal 50, and an example where the consumer terminal 50 is a smartphone will be described in the present embodiment. However, the consumer terminal 50 may be a mobile information terminal other than the smartphone, or may be a desktop computer or a smart display. In any case, the consumer terminal 50 also includes a processor, a memory, an input IF, an output IF, and a communication IF, as a hardware configuration.

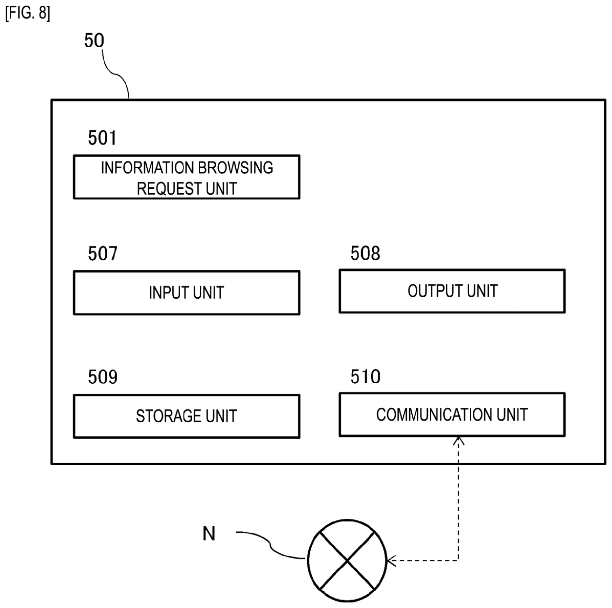

FIG. 8 is a block diagram schematically illustrating a functional configuration of the consumer terminal 50. As illustrated in FIG. 8, the consumer terminal 50 includes functional units of an information browsing request unit 501, an input unit 507, an output unit 508, a storage unit 509, and a communication unit 510. Since the input unit 507, the output unit 508, and the communication unit 510 are the same as those of the authentication organization terminal 10, and the storage unit 509 is also the same as the storage unit 109 of the authentication organization terminal 10 except that a DB such as the authenticated product information DB is not held, description thereof will be omitted.

The information browsing request unit 501 makes a browsing request for product information that is authenticated at least at the authentication organization terminal 10 and stored in the storage unit 109 of the authentication organization terminal 10 in association with the certification information. More specifically, the information browsing request unit 501 transmits a browsing request for information to the authentication organization terminal 10, and requests browsing of information associated with the product ID using the product ID as the key through the acceptance processing of the information browsing request acceptance unit 104.

Note that inputting the user ID (and a password associated with the user ID) at a time of making a browsing request for information enables browsing of the information within the range of the privilege associated with the user ID. Note that, although a general consumer who has obtained a product is not generally assigned with a user ID, basic information related to the product can be browsed even without the user ID.

For example, when information including a product ID is encoded like a QR code (registered trademark) and attached to a product, it is possible to automatically perform processing of decoding the information including the product ID by shooting the code with a camera that is the input unit 507 of the consumer terminal 50, transmitting an information browsing request to the authentication organization terminal 10, acquiring (a portion of basic content of) product information associated with the product ID, and displaying the product information on the display functioning that is the output unit 508. Such a mechanism enables even a general consumer who has no knowledge of the mechanism of the information processing system 1 to browse product information on basis content simply by reading the code attached to the product using the camera, and improve consumer convenience.

### (Flow of Information Processing)

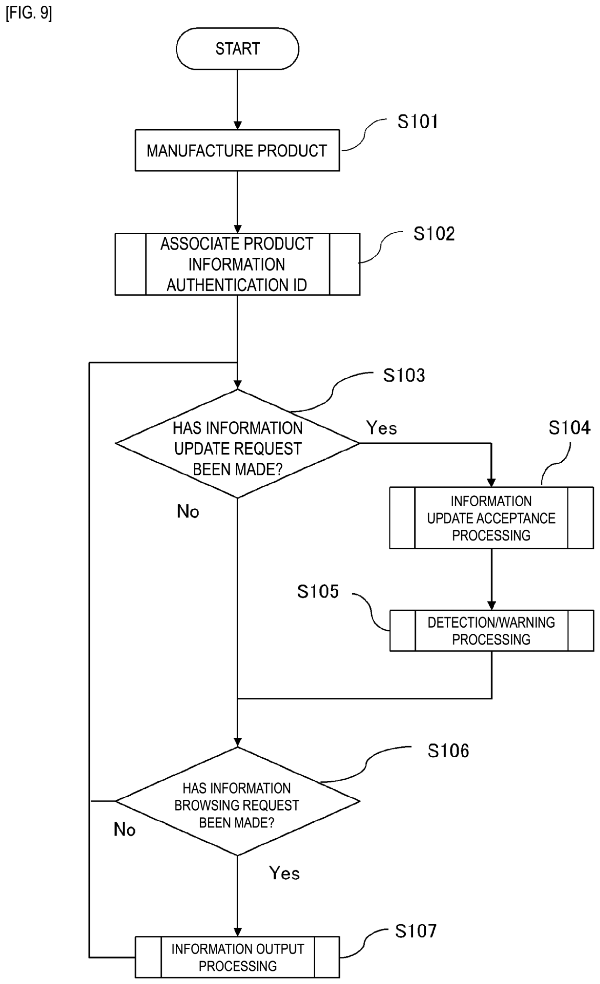

Next, a flow of information processing performed in the information processing system 1 according to the present embodiment will be described below with reference to FIGS. 9 to 13. FIG. 9 is a flow chart schematically illustrating processing performed in the information processing system 1. As illustrated in FIG. 9, the information processing system 1 executes a step (S101) of manufacturing a product by a product manufacturer, a step (S102) of performing processing of authenticating product information and associating the product information with a product ID, a step (S103) of determining whether there is an update request for information stored in the DB to the authentication organization terminal 10, a step (S104) of accepting information update, a step (S105) of determining whether the accepted information update matches a predetermined detection target, and warning a predetermined user when the accepted information update matches the predetermined detection target, a step (S106) of determining whether there is a browsing request for information stored in the DB to the authentication organization terminal 10, and a step (S107) of outputting information related to a browsing request. A flow of processing performed in each step will be described below in more detail.

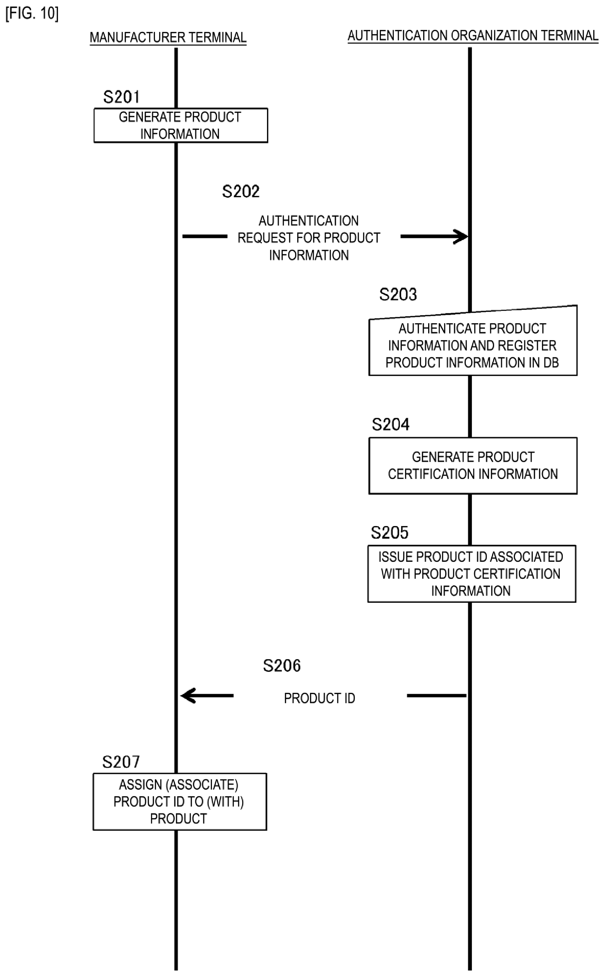

FIG. 10 is a diagram illustrating a subroutine of step S102 in the flow chart in FIG. 9, and illustrating exchange of information performed between the authentication organization terminal 10 and the product manufacturer terminal 20, and a flow of processing. As illustrated in FIG. 10, when a product manufacturer manufactures a new product, the product information generation unit 201 of the product manufacturer terminal 20 generates product information (S201). Furthermore, the product manufacturer terminal 20 transmits an authentication request for the generated product information to the authentication organization terminal 10 through the communication unit 210 (S202). The authentication organization terminal 10 accepts the request at the authentication request acceptance unit 101, and a person in charge on the authentication organization side authenticates the product information, and registers (stores) the product information in the authenticated product information DB (S203). Subsequently, in the authentication organization terminal 10, the certification information generation unit 102 generates product certification information that certifies product information related to the authentication request (S204), and the ID issuing unit 103 issues the product ID associated with the product certification information (S205). The issued product ID is transmitted to the product manufacturer terminal 20 through the communication unit 110 (S206), and the product ID association unit 202 of the product manufacturer terminal 20 performs processing of associating the product ID and the product identified based on the product ID (S207). When the above-described series of processes are executed, the subroutine of step S102 is temporarily ended.

Returning the description to the flow of the processing in FIG. 9, in step S103, the authentication organization terminal 10 (more specifically, the information update acceptance unit 105) determines whether there is an update request for the product information stored in the storage unit 109 (authenticated product information DB). Here, when determining that there is the update request, the information update acceptance unit 105 executes processing of accepting the update (S104).

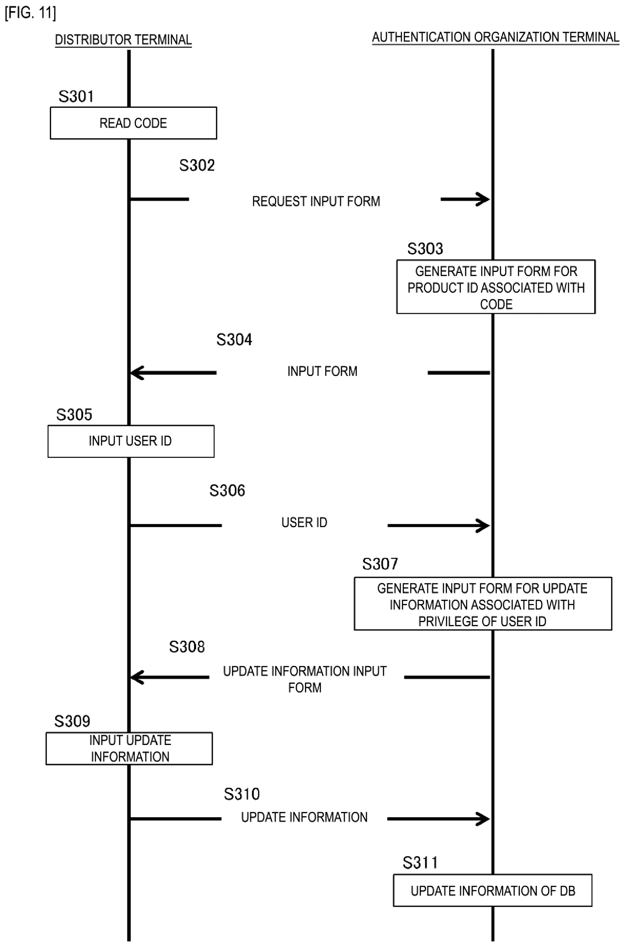

Hereinafter, a flow of processing in the case where there is a request for information update in step S103 will be described. FIG. 11 is a diagram illustrating exchange of information performed between the authentication organization terminal 10 and the distributor terminal 40, and a flow of processing.

As described above, in the present embodiment, a code (e.g., a QR code (registered trademark)) obtained by encoding information including a product ID is attached to a product. In a case where a business operator involved in distribution of the product wishes to update the product information, the code attached to the product is read by the decoding unit (e.g., a QR code (registered trademark) reader) that is the input unit 407 of the distributor terminal 40 (S301). By so doing, the information encoded by the information update request unit 402 is decoded, and request information for an input form for a user ID is transmitted to the authentication organization terminal 10 based on the information (S302). Note that, as described above, the decoding unit of the distributor terminal 40 includes the environmental sensor, and information on the temperature/humidity in the environment in which the product is placed when the code is read in step S301 is stored in the storage unit 409 of the distributor terminal 40.

When receiving the request for the input form, the information update acceptance unit 105 of the authentication organization terminal 10 generates the input form for the user ID associated with the product ID included in the code (S303), and transmits the input form to the distributor terminal 40 (S304). When receiving the form, the input form for the user ID and a password is displayed on the output unit 408 of the distributor terminal 40. When the user ID is input to the form through the input unit 407 of the distributor terminal 40 (S305), information on the user ID (and the password) is transmitted to the authentication organization terminal 10 through the communication unit 410 (S306).

In the authentication organization terminal 10 having received the user ID, the information update acceptance unit 105 generates an input form for update information associated with the privilege of the transmitted user ID (S307), and transmits the input form to the distributor terminal 40 (S308). In the distributor terminal 40 having received the input form for the update information, the input form is displayed by the output unit 408. Furthermore, when the update information is input through the input unit 407 of the distributor terminal 40 (S309), the update information is transmitted to the authentication organization terminal 10 through the communication unit 410 (S310). Note that the information transmitted to the authentication organization terminal 10 may include not only the information input in step S309, but also information on the temperature/humidity in the environment in which the product is placed.

In the authentication organization terminal 10 having received the update information, the information update acceptance unit 105 updates the authenticated product information stored in the storage unit 109 (S311), and the series of processes of the subroutine of step S104 are ended.

Note that, while an example of information update processing performed by (the information update request unit 402 of) the distributor terminal 40 has been described above, similar processing can be also performed by (the information update request unit 206 of) the product manufacturer terminal 20.

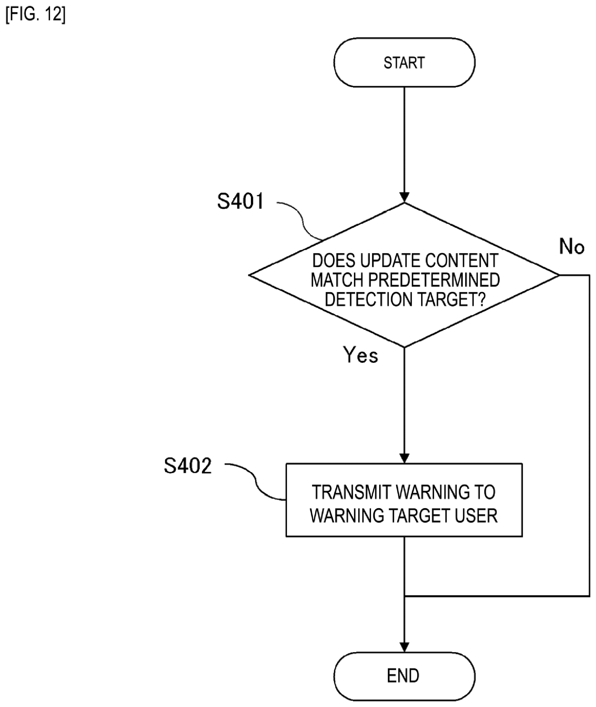

After step S104, the authentication organization terminal 10 (more specifically, the detection unit 106 and the warning processing unit 111) performs detection processing and warning processing (step S105). To more specifically describe the processing in step S105 with reference to FIG. 12, the detection unit 106 determines whether the update accepted in step S104 matches a predetermined detection target processing indicating that the product has been inappropriately handled (S401). Since the content of the detection target processing for the detection unit 106 has already been described, redundant description thereof will be omitted. Here, when the detection unit 106 determines that the information update accepted in step S104 does not match the predetermined detection target, the warning processing unit 111 transmits warning information to a predetermined warning target user (S402), and ends the subroutine. On the other hand, when it is determined in step S401 that the information update accepted in step S104 does not match the predetermined detection target, the subroutine is ended without proceeding to step S402.

Returning description to the flow in FIG. 9 again, the authentication organization terminal 10 (more specifically, the information browsing request acceptance unit 104) determines whether there is a browsing request for the authenticated product information stored in the storage unit 109 (S106). Here, when determining that there is the browsing request for the authenticated product information, the information browsing request acceptance unit 104 performs processing of outputting information related to the browsing request (S107).

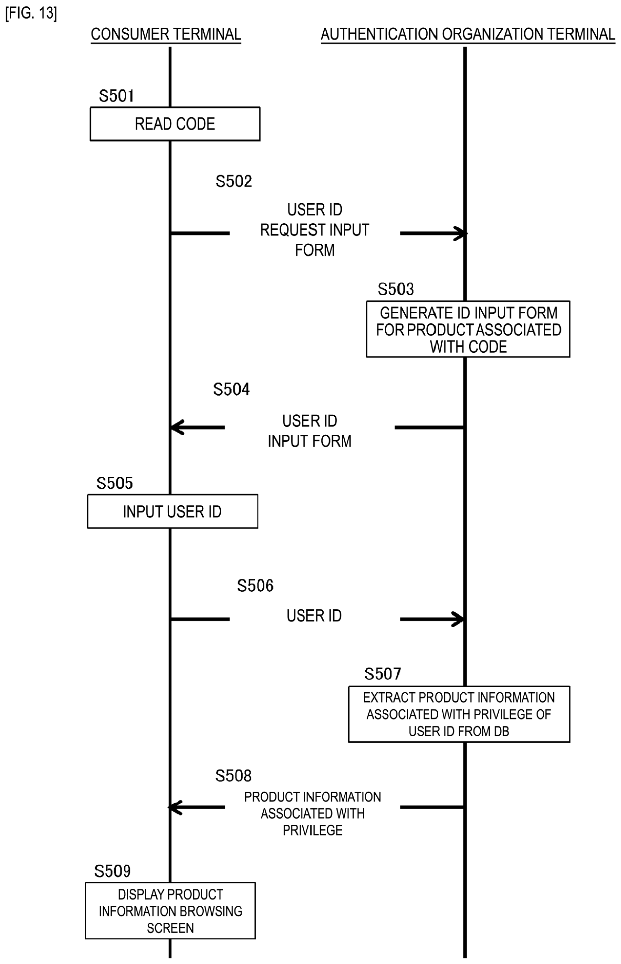

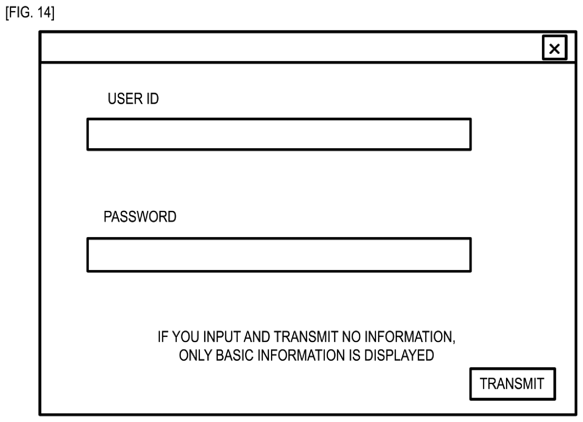

Hereinafter, a flow of processing in the case where there is a browsing request for information will be described. FIG. 13 is a diagram illustrating exchange of information performed between the authentication organization terminal 10 and the consumer terminal 50, and a flow of processing. When a consumer who has obtained the product wishes to browse the product information, a code attached to a product is read using code reading means (e.g., camera) that is the input unit 507 of the consumer terminal 50 (S501). By so doing, the information encoded by the information browsing request unit 501 is decoded, and request information for the input form for the user ID is transmitted to the authentication organization terminal 10 based on the information (S502). When receiving the request for the input form, the information browsing request acceptance unit 104 of the authentication organization terminal 10 generates the input form for the user ID associated with the product ID included in the code (S503), and transmits the input form to the consumer terminal 50 (S504). When receiving the form, the input form for the user ID and the password is displayed on the output unit 508 of the consumer terminal 50. FIG. 14 illustrates an example of the input form for the user ID and the password.

When the user ID (and the password) is input to the form through the input unit 507 of the consumer terminal 50 (S505), information on the user ID (and the password) is transmitted to the authentication organization terminal 10 through the communication unit 410 (S506). In the authentication organization terminal 10 having received the user ID, the information browsing request acceptance unit 104 extracts the product information associated with the privilege of the transmitted user ID from the storage unit 109 (S507), and transmits the information to the consumer terminal 50 (S508). In the consumer terminal 50 having received the product information, a browsing screen of the product information is displayed by the output unit 508 (S509), and the series of processes of the subroutine of step S107 are ended.

Note that, in the information processing system 1 according to the present embodiment, as illustrated in FIG. 14, even when a transmission button is pressed without inputting the user ID and the password, information that a person without a privilege can browse is displayed. Consequently, even a user who does not have a user ID, such as a general consumer, can browse basic information among product information.

Furthermore, while an example of information browsing processing performed by (the information browsing request unit 501 and the output unit 508 of) the consumer terminal 50 has been described above, similar processing can be also performed by (the information browsing request unit 205 and the output unit 208 of) the product manufacturer terminal 20, and (the information browsing request unit 401 and the output unit 408 of) the distributor terminal 40.

Returning description to the flow illustrated in FIG. 9, when NO is determined in step S106, and after the processing in step S107 is finished, the processing returns to step S103, and the subsequent processes are repeated until a predetermined end condition is satisfied. However, the above-described flow of processing is an example, and can also adopt a routine that does not include a part of the processes in step S105 and step S106.

### (Effects of Present Embodiment)

According to the information processing system 1 according to the present embodiment as described above, an event that occurs in response to distribution of a product and information on the user related to the event are appended to the product information, so that it is possible to recognize inappropriate processing (that is not limited to falsification of information, and includes processes indicating undesirable handling of the product in general) for the product information. Furthermore, when inappropriate processing is performed, warning information is transmitted to any user (e.g., a user on an upstream side of logistics such as a product manufacturer) involved in manufacturing and distribution of the product, so that the user having received the warning can quickly take a countermeasure. Thus, it is possible to prevent inappropriately handled products from reaching end consumers.

Furthermore, the product information is authenticated by the authentication organization, and then is stored in the DB, so that it is possible to support guarantee of the original authenticity of the product information handled in the system. Furthermore, the information processing system having excellent tamper resistance can be provided by limiting update of the certified product information to appending of information, and recording various information such as the update content and an updater together.

Furthermore, when the product information indicating handling of the product to be warned is updated, the information indicating the handling to be warned is appended to the product information, so that the user can recognize the information related to distribution of the product, or that handling to be warned in the distribution process of the product has been performed. Consequently, even if the user having received the warning does not take any special countermeasures, the user (including end consumers) on a downstream side of distribution can make determination on handling of the product based on the information.

Furthermore, as described above, since the decoding unit in the product manufacturer terminal 20 and the distributor terminal 40 includes the environment sensor, so that it is possible to automatically acquire a temperature/humidity at which the product has been placed at a point of time when a code is decoded, and, by appending values of the temperature/humidity when the product information is updated, it is possible to prevent the user from appending to the product information a temperature/humidity different from the fact. Such a configuration is particularly suitable in a case where the product is greatly affected by an environment such as an environment related to food and drink.

Furthermore, each user (including the end consumers) in the distribution process of the product can determine a browsable range of the product information and an updatable range of the product information, and each user can easily browse information having content associated with a browsing privilege of the product information by associating the browsing privilege with each user ID, while a provider of the information can determine to whom and what information is to be provided, so that it is possible to implement a highly convenient system. Furthermore, the user can update information according to the update privilege for the information, and the record of the update is appended to the product information at the time of the update, so that it is possible to implement a system that has excellent tamper resistance and is highly convenient.

### (Variation 1)

Note that above Embodiment 1 employs the configuration where the product information that has been authenticated (that is, associated with certification information) is stored as the DB in the storage unit 109 of the authentication organization terminal 10, yet does not necessarily need to employ such a configuration. For example, the product information associated with the certification information in the authentication organization terminal 10 may be configured to be stored as a DB in the storage unit 209 of the product manufacturer terminal 20.

In such a case, when a browsing request or an update request for information is made from each terminal, the authentication organization terminal 10 may be configured to play a role of a mediator that makes it possible to reach corresponding product information using the product ID as the key.

### (Variation 2)

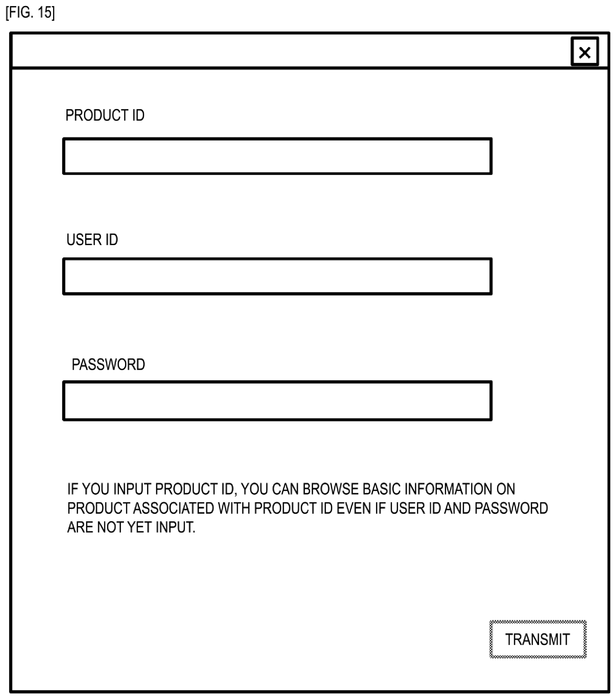

Furthermore, although the example where the code encoded to include the product ID information is attached to the product, and the input form for browsing or updating the product information is accessed by reading the code has been described in the above embodiment, it is possible to browse or update information by other methods. For example, a common input form for ID input may be published in advance on the Internet, and the ID input may be accepted through the input form to display the product information and/or display an update form matching the privilege. An example of such a common ID input form is illustrated in FIG. 15.

### (Variation 3)

Note that, in a case where a product related to product information handled by the information processing system 1 is a so-called mass-produced product, it is convenient to pack a plurality of products and manage a situation such as a location of packages in units of packages (or in units of groups obtained by further packing a plurality of the packages) in the distribution process. The present variation is configured to be able to manage the product information in such a group unit.

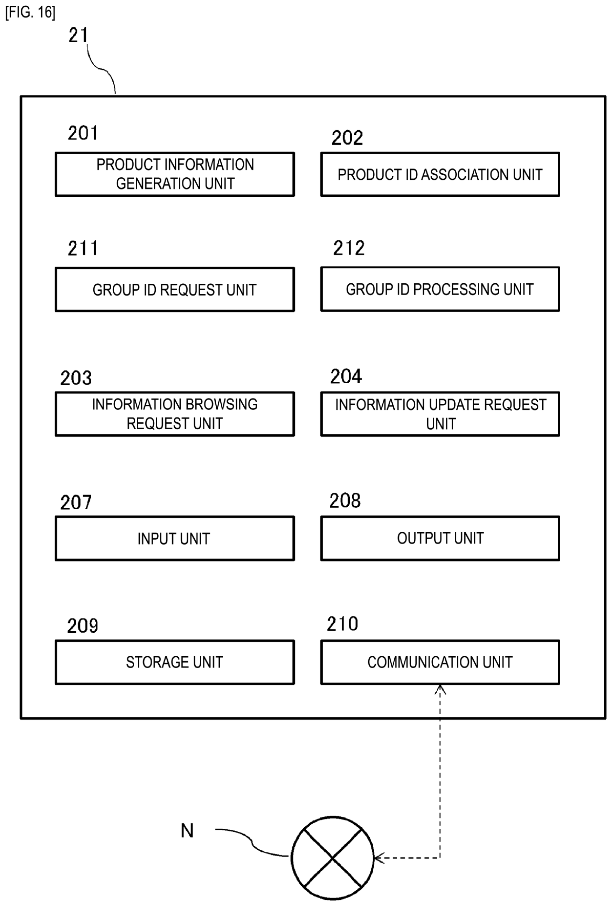

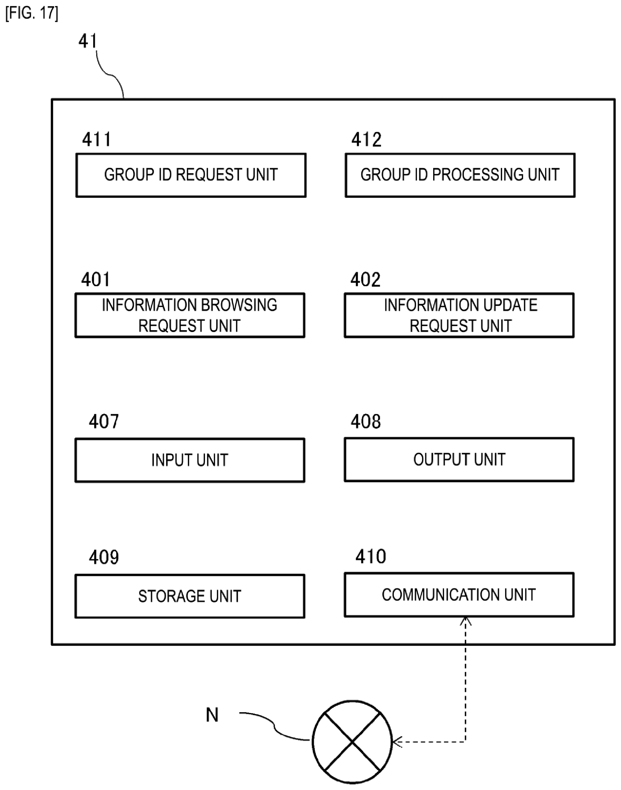

FIG. 16 is a block diagram illustrating a functional configuration of a manufacturer terminal 21 according to the present variation, and FIG. 17 is a block diagram illustrating a functional configuration of a distributor terminal 41 according to the present variation. Note that, since most of components of the information processing system according to the present variation are the same as those of the information processing system 1 according to Embodiment 1, the same configuration and processes as those in Embodiment 1 will be denoted with the same reference numerals, and redundant description thereof will be omitted.

As illustrated in FIG. 16, the manufacturer terminal 21 according to the present variation is the same as the product manufacturer terminal 20 according to Embodiment 1 except that the manufacturer terminal 21 includes a group ID request unit 211 and a group ID processing unit 212 as functional components. Furthermore, as illustrated in FIG. 17, the distributor terminal 41 is the same as the distributor terminal 40 according to Embodiment 1 except that the distributor terminal 41 also includes a group ID request unit 411 and a group ID processing unit 412 as functional components.

The group ID request unit 211 and the group ID request unit 411 request the authentication organization terminal 10 to issue a group ID for collectively identifying (managing) a plurality of product groups having the same content.

In the authentication organization terminal 10 having received the group ID issuance request, the ID issuing unit 103 issues the group ID. Note that the issued group ID is stored in the storage unit 109 and managed as a group ID DB as a part of the relational database.

The group ID processing unit 212 of the manufacturer terminal 21 and the group ID processing unit 412 of the distributor terminal 41 perform processing for associating, with the group ID, product IDs of products that need to be managed with the issued group ID. For example, one group ID may be set to a plurality of products contained in one storage container (such as a cardboard box) for management, or a group ID may be set in units of pallets having stored a plurality of such storage containers. Note that the information on the association is transmitted to the authentication organization terminal 10 and reflected in the product ID DB and the group ID DB of the storage unit 109.

After the product IDs and the group ID are associated with each other in this manner, the information update acceptance unit 105 of the authentication organization terminal 10 accepts an update request for the product information based on the group ID, and collectively updates the product information on the plurality of products associated with the group ID.

Note that a privilege to set (associate) and cancel the group ID may be assigned in association with a user ID. The privilege can be assigned by a user (e.g., product manufacturer) on the upstream side in the distribution process of a product.

According to this variation, when a large number of the same products are handled at the same time, the information can be updated and managed in units of groups without updating individual product information, so that a very convenient system can be provided.

### <Embodiment 2>

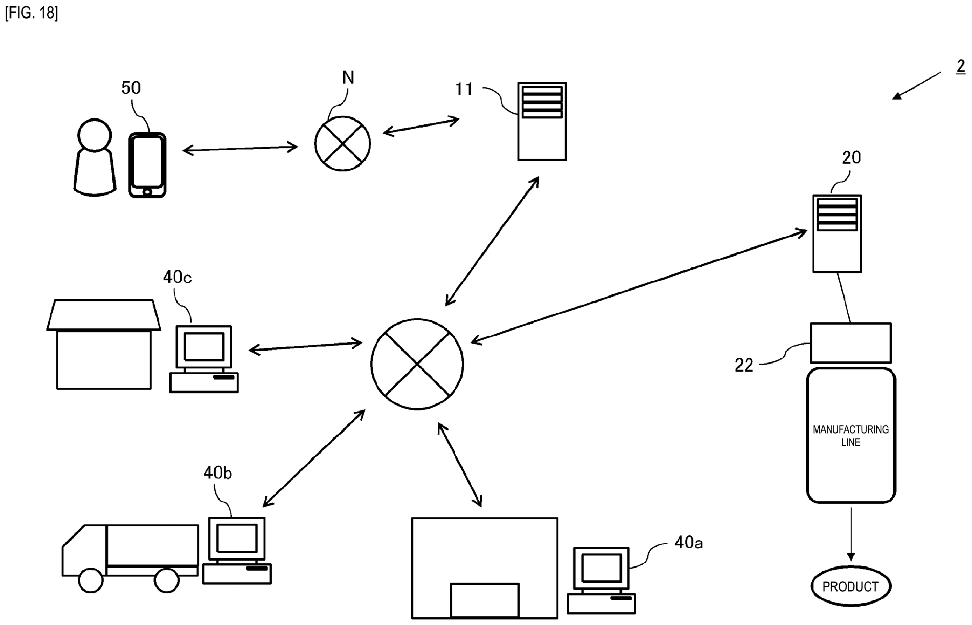

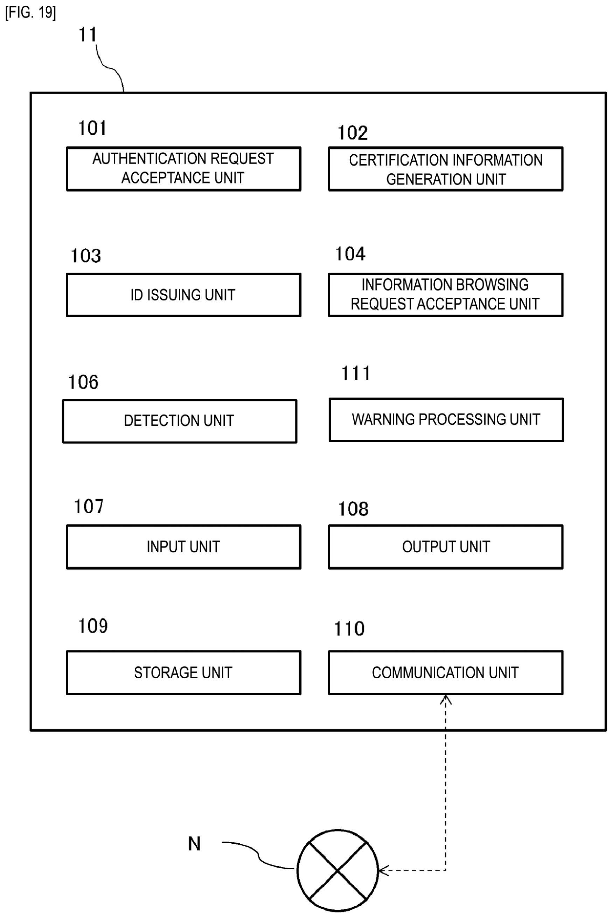

Next, another embodiment of the present invention will be described below with reference to FIGS. 18 and 19. FIG. 18 is a schematic view illustrating a schematic configuration of an information processing system 2 according to the present embodiment. Hereinafter, the same components and processes as those of the information processing system 1 according to Embodiment 1 are denoted with the same reference numerals, and redundant description thereof will be omitted. As illustrated in FIG. 18, the information processing system 2 according to the present embodiment is different from the information processing system 1 according to Embodiment 1 in an authentication organization terminal 11, the product manufacturer terminal 20, and the distributor terminal 40 being connected to a blockchain network BCN, and in the consumer terminal 50 and the authentication organization terminal 11 being connected through the general-purpose communication network N.

In the information processing system 2 according to the present embodiment, a blockchain system, which is one of distributed ledger technologies, is used to manage product IDs, product information, product certification information, user information, and user IDs.

Note that the blockchain system is a system that includes a plurality of node apparatuses connected to a blockchain network in which information is managed in a Peer-To-Peer (P2P) manner, and in which the plurality of node apparatuses distributively share (hold and manage) various information. Since the blockchain system is a publicly known technique, detailed description thereof will be omitted.

In the present embodiment, the authentication organization terminal 11, the product manufacturer terminal 20, and the distributor terminal 40 each correspond to a node apparatus of the blockchain network BCN. Furthermore, other information processing terminals may be included as node apparatuses. In the information processing system 2 according to the present embodiment, there is no database in the authentication organization terminal 11, and various information such as product information and user information is distributively stored in (each storage unit of) the terminal that is a node apparatus. More specifically, for example, product information according to the present embodiment is retained in a form of a block storing a timestamp at a time of generation (or update) of the content in each node apparatus, a hash value determined by a hash function according to the content of information and indicating content of an immediately preceding block, the content of the product information, and product certification information that certifies the (initial) product information (at a time of generation). Note that the product information retained in the block may be a key (e.g., an ID) associated with a body of information in which each product element information is separately retained.

Each block is sequentially newly created in association with the block created immediately before. More specifically, when product information is updated, a new block including, as a set, a timestamp at the time of the update, a hash value of the information before being updated, the updated product information, and product certification information is newly created in association with the previous block. Since such a blockchain is created in each node apparatus, when information is updated, the fact and content of the update are constantly visualized for participants in the system.

FIG. 19 is a functional block diagram of the authentication organization terminal 11 according to the present embodiment. As illustrated in FIG. 19, the authentication organization terminal 11 according to the present embodiment includes substantially the same functional units as those of the authentication organization terminal 10 according to Embodiment 1, yet does not include the information update acceptance unit 105. This is because, in the information processing system 2 according to the present embodiment, regarding update and browsing of information from the product manufacturer terminal 20 and the distributor terminal 40, the information can be by directly read from the blockchain network BCN and updated.

On the other hand, the consumer terminal 50, which does not generate or update information processed by the information processing system 2, is disconnected from the blockchain network BCN, and adopts a mechanism that receives provision of information managed in the blockchain network BCN through the authentication organization terminal 11. The flow of a browsing request for information in this case is substantially the same as that in Embodiment 1, and differs from Embodiment 1 in the authentication organization terminal 11 not extracting the information related to the browsing request from a database in the own storage unit, but acquiring the information from the blockchain network BCN and providing the information to the consumer terminal 50.

Furthermore, when the product information in the blockchain network BCN is updated, the detection unit 106 of the authentication organization terminal 11 may detect this update based on a change in the value of data in the blockchain, and acquire content of the product information related to the update, thereby determining whether the update processing of the product information is detection target processing.

The information processing system 2 according to the present embodiment as described above uses
the blockchain system and does not need a database, so that it is possible to construct a stable system that is robust against system downtime . Furthermore, a system with strong tamper resistance can be provided, since unauthorized updating (tampering) of information can be easily confirmed when such unauthorized updating occurs.

### <Others>

The description of the above respective examples is merely exemplary description of the present invention, and the present invention is not limited to the above specific embodiments. Various modifications and combinations are possible for the present invention within the scope of the technical concept of the present invention. For example, in the above embodiment, the processing detected by the detection unit 106 is update processing of product information indicating inappropriate (undesirable) handling of a product, yet, conversely, the detection unit 106 may detect update processing of the product information indicating appropriate handling of a product. In this case, when the update processing of the product information indicating the appropriate handling of the product is not detected by the detection unit 106, the same effect as that of Embodiment 1 can be obtained by performing the warning processing by the warning processing unit 111.

Furthermore, although the warning processing unit 111 is implemented as the functional unit of the authentication organization terminal 10 in the above embodiments, the warning processing unit 111 may be a component included in a terminal managed by any (or all) of the other users. In this case, as the warning processing, a warning using characters, images, or sounds may be issued through output means of the terminal managed by the user who needs to be warned. Furthermore, even when the warning processing unit 111 is provided in the authentication organization terminal 10, transmission of a command signal for causing the output means of the terminal managed by the user to issue a warning may be performed as the warning processing.

Furthermore, although a product ID for identifying each product is issued individually in response to each request for authentication of each piece of product information in the above embodiments, it can naturally be assumed that a plurality (a large number) of products having the same content of product information to be certified are manufactured. In such a case, it is inefficient to perform authentication and issuance of a product ID for individual product information on a one-by-one basis. Hence, as for product information having the same content to be certified, the authentication organization terminal may issue a plurality of product IDs associated with the single piece of product information to be certified, and transmit the product IDs to the product manufacturer terminal in advance. Consequently, when products related to product information having the same content are manufactured, a system that does not need to request issuance of a product ID each time and has excellent convenience can be provided. However, in this case, if a product manufacturer inappropriately appropriates product Ids, the reliability of the system is significantly impaired, and therefore a mechanism for ensuring reliability by, for example, targeting only reliable and trustworthy product manufacturers is required.

Furthermore, the information processing system may be configured such that the product manufacturer terminal includes an ID issuing unit for products, and the authentication organization terminal includes a product ID association unit. That is, the product manufacturer may assign an ID (such as a serial number) of an individual product to a product related to manufacturing (at this stage, the product and the ID are not associated with product certification information), then the authentication organization may authenticate product information in a manner to respond to a request from the product manufacturer terminal, and the authentication organization terminal generates product certification information, and associates the product certification information with the (reported) product ID.

### <Supplementary Note 1>

An information processing system 1 that includes one or more information processing apparatuses and processes information related to a product includes:
storage unit 109 configured to store product information that is an information group associated with a product ID for identifying each individual product, and including at least information related to a manufacturing condition of the product;
information update unit 105 configured to update the product information associated with the product ID in response to occurrence of a predetermined event related to manufacturing or distribution of the product using a user ID for identifying a user related to at least one of the manufacturing, the distribution, or certification of the product and information on the product ID, and causes the storage unit to store the information on the user ID used for the update in association with the product information related to the update;
detection unit 106 configured to detect one or more first detection target processes or one or more second detection targets for the product information determined in advance for each product ID; and
warning unit 111 configured to execute predetermined warning processing when the one or more first detection target processes for the product information are detected or when the one or more second detection target processes are not detected.

### <Supplementary Note 2>

The information processing system according to Supplementary Note 1, wherein the information update unit causes the storage unit to store information on a time of the update together with the information on the user ID used for the update in association with the product information related to the update when the update is performed.

### <Supplementary Note 3>

The information processing system according to Supplementary Note 1 or 2, wherein the warning unit sends warning information to users including at least one of a user identified based on one of the user IDs stored when the product information is updated, or a user set in advance.

### <Supplementary Note 4>

The information processing system according to any one of Supplementary Notes 1 to 3, wherein the product information includes at least certified manufacturing information that is information related to the manufacturing of the product and has been authenticated by an authentication organization.

### <Supplementary Note 5>

The information processing system according to any one of Supplementary Notes 1 to 4, wherein the predetermined event includes work to be performed on the product in a process of the distribution of the product, and
the information update unit updates the product information when the one or more first detection target processes are detected or when the one or more second detection target processes are not detected.

### <Supplementary Note 6>

The information processing system according to any one of Supplementary Notes 1 to 5, wherein the predetermined event includes that the one or more first detection target processes for the product information are detected or the one or more second detection target processes are not detected, and the information update unit updates the product information when the one or more first detection target processes are detected or when the one or more second detection target processes are not detected.

### <Supplementary Note 7>

The information processing system according to any one of Supplementary Notes 1 to 6 further includes group ID validation unit 212 and 412 that associate a group ID for identifying a group including a plurality of the products, and the product ID of each individual product included in the group, and
the information update unit is configured to collectively update the product information associated with each individual product included in the group using information on the group ID.

### <Supplementary Note 8>

The information processing system according to any one of Supplementary Notes 1 to 7 further includes:
encoding unit 202 that converts information including at least the product ID into a code; and
one or more decoding unit 207 and 407 configured to decode the information converted into the code and enable access to the product information associated with the product ID.

### <Supplementary Note 9>

The information processing system according to Supplementary Note 8, wherein
a privilege related to the access to each piece of the product information is set to the user ID, each individual decoding unit is associated with the user ID, and
the information update unit appends, to the product information, predetermined information associated with the privilege set to the corresponding user ID when the code is decoded by the decoding unit.

### <Supplementary Note 10>

The information processing system according to Supplementary Note 8 or 9, wherein
the code includes information indicating a location of a first interface for accessing the product information associated with the product ID, and
the decoding unit is configured to output the first interface by decoding the information indicating the location of the first interface.

### <Supplementary Note 11>

The information processing system according to Supplementary Note 10, wherein
the first interface output by the decoding unit includes a field for accepting an input of the user ID, and
the decoding unit outputs a second interface matching the privilege associated with the user ID whose input has been accepted.

### <Supplementary Note 12>

An information processing method that is executed by one or more information processing apparatuses and processes information related to a product includes:
storing product information that is an information group associated with a product ID for identifying each individual product, and including at least information related to a manufacturing condition of the product (S203);
updating the product information associated with the product ID in response to occurrence of a predetermined event related to manufacturing or distribution of the product using a user ID for identifying a user related to at least one of the manufacturing, the distribution, or certification of the product and information on the product ID, and storing the information on the user ID used for the update in association with the product information related to the update (S104);
detecting one or more first detection target processes or one or more second detection target processes for the product information determined in advance for each of the product IDs (S401); and
executing predetermined warning processing when the one or more first detection target processes for the product information are detected or when the one or more second detection target processes are not detected (S402).

### <Supplementary Note 13>

A program causing an information processing apparatus to execute the storing, the updating, the detecting, and the executing of the information processing method according to Supplementary Note 12.

### REFERENCE SIGNS

1, 2 ...Information processing system
10, 11 ...Authentication organization terminal
20, 21 ...Manufacturer terminal
22 ...Control apparatus
40, 40a, 40b, 40c, 41 ...Distributor terminal
50 ...Consumer terminal
90 ...Bus
91 ...Processor
92 ...Memory
93 ...Input IF
94 ...Output IF
95 ...Communication IF
N ...Communication network
BCN ...Blockchain network

## Claims

1. An information processing system that includes one or more information processing apparatuses and processes information related to a product, the information processing system comprising:
storage unit configured to store product information that is an information group associated with a product ID for identifying each individual product and including at least information related to a manufacturing condition of the product;
information update unit configured to update the product information associated with the product ID in response to occurrence of a predetermined event related to manufacturing or distribution of the product using a user ID for identifying a user related to at least one of the manufacturing, the distribution, or certification of the product and information on the product ID, and causes the storage unit to store the information on the user ID used for the update in association with the product information related to the update;
detection unit configured to detect one or more first detection target processes or one or more second detection target processes for the product information determined in advance for each product ID; and
warning unit configured to execute predetermined warning processing when the one or more first detection target processes for the product information are detected or when the one or more second detection target processes are not detected.

2. The information processing system according to claim 1, wherein the information update unit causes the storage unit to store information on a time of the update together with the information on the user ID used for the update in association with the product information related to the update when the update is performed.

3. The information processing system according to claim 1, wherein the warning unit sends warning information to users including at least one of a user identified based on one of the user IDs stored when the product information is updated, or a user set in advance.

4. The information processing system according to claim 1, wherein the product information includes at least certified manufacturing information that is information related to the manufacturing of the product and has been authenticated by an authentication organization.

5. The information processing system according to claim 1, wherein
the predetermined event includes work to be performed on the product in a process of distribution of the product, and
the information update unit updates the product information when the work is performed.

6. The information processing system according to claim 1, wherein
the predetermined event includes that the one or more first detection target processes for the product information are detected or the one or more second detection target processes are not detected, and
the information update unit updates the product information when the one or more first detection target processes are detected or when the one or more second detection target processes are not detected.

7. The information processing system according to claim 1, further comprising group ID validation unit configured to associate a group ID for identifying a group including a plurality of the products, and the product ID of each individual product included in the group,
wherein the information update unit is configured to collectively update the product information associated with each individual product included in the group using information on the group ID.

8. The information processing system according to claim 1, further comprising:
encoding unit configured to convert information including at least the product ID into a code; and
one or more decoding unit configured to decode the information converted into the code and enable access to the product information associated with the product ID.

9. The information processing system according to claim 8, wherein
a privilege related to the access to each piece of the product information is set to the user ID,
each individual decoding unit is associated with the user ID, and
the information update unit appends, to the product information, predetermined information associated with the privilege set to the corresponding user ID when the code is decoded by the decoding unit.

10. The information processing system according to claim 8, wherein
the code includes information indicating a location of a first interface for accessing the product information associated with the product ID, and
the decoding unit is configured to output the first interface by decoding the information indicating the location of the first interface.

11. The information processing system according to claim 9, wherein
the first interface output by the decoding unit includes a field for accepting an input of the user ID, and
the decoding unit outputs a second interface matching the privilege associated with the user ID whose input has been accepted.

12. An information processing method that is executed by one or more information processing apparatuses and processes information related to a product, the information processing method comprising:
storing product information that is an information group associated with a product ID for identifying each individual product, and including at least information related to a manufacturing condition of the product;
updating the product information associated with the product ID in response to occurrence of a predetermined event related to manufacturing or distribution of the product using a user ID for identifying a user related to at least one of the manufacturing, the distribution, or certification of the product and information on the product ID, and storing the information on the user ID used for the update in association with the product information related to the update;
detecting one or more first detection target processes or one or more second detection target processes for the product information determined in advance for each product ID; and
executing predetermined warning processing when the one or more first detection target processes for the product information are detected or when the one or more second detection target processes are not detected.

13. A program causing an information processing apparatus to execute the storing, the updating, the detecting, and the executing of the information processing method according to claim 12.
